# EUROPEAN PATENT APPLICATION

(11) **EP 1 600 842 A2**
(43) Date of publication of application: **30.11.2005**
(21) Application number: 05010780.4
(22) Date of filing: 18.05.2005
(51) Int. Cl.: G06F 1/00

(54) **Method and apparatus for credential management on a portable device**

(30) Priority: 28.05.2004 US 856018
(71) Applicant: SYMBOL TECHNOLOGIES, INC., Holtsville, NY 11742 (US)
(72) Inventor: D'Agostino, Anthony, Smithtown, NY 11787 (US); Meyer, David A., Merrick, NY 11566 (US); DellaRatta, George, Shirley, NY 11967 (US); Arcelo, Vincent, Gilroy, CA 95020 (US)
(74) Representative: Grünecker, Kinkeldey, Stockmair & Schwanhäusser Anwaltssozietät

(57) **Abstract**

A system and/or method that enables a user to manage credential information for approving communications with various network and/or server components. A portable device is provided that facilitates management of a user credential that can be used to connect to a network (*e.g.*, wireless, wired). The portable device includes an input component and a retention component. The input component defines a selected input method to input the user credential into the portable device. The retention component defines a parameter for storing the user credential in accordance with a user-defined selection. Additionally, the portable device can include a data store (*e.g.*, cache memory) that retains the user credential and a purging component configured to subsequently erase the user credential in accordance with the user-defined selection.

## Description

### TECHNICAL FIELD

This invention is related generally to computer systems, and more particularly to a system and/or method to manage user credentials to authenticate to various network and/or server components.

### BACKGROUND OF THE INVENTION

With the technological advances in wired and wireless networks, there is an ongoing and increasing need for the establishment of security systems and procedures to protect against unauthorized network access.

Today, most networks utilize a requirement of successful compliance with security procedures (*e.g.*, authentication) in order to successfully connect to the network. These security procedures protect against unauthorized access to the network. By way of example, when two or more wireless parties (*e.g.*, a mobile client and a server) wish to establish a level of security, they will typically "authenticate."

Typically, network authentication requires the identification of authorized user credentials (*e.g.*, login name, password) in order to successfully connect to the network thereby accessing data and enabling communications therein. In other words, a remote terminal proves its identity to the server by supplying authentication user credential(s) information. The server then processes the user credentials and either permits or denies access to the network.

Conventional implementations required these user credentials to be manually entered and re-entered upon every authentication occurrence. Additionally, conventional systems did not afford a user the ability to manage the user credentials. For example, typically, a user would login by manually supplying user credentials to the authentication server each time access was desired or when a connection was acquired/re-acquired.

The continuous re-entry of credential information places a burden on a user to provide this credential information each time authentication or re-authentication is desired. By way of example, in accordance with conventional systems, each time a wireless mobile terminal roams from one node (*e.g.*, access port) to another or from one server to another, a user is required to re-authenticate by manually entering user credentials.

Although attempts have been made *via* proxy servers to mitigate the aforementioned concerns, there is still a substantial unmet need for a system and/or method that facilitates the management of user credentials on a remote device.

### SUMMARY OF THE INVENTION

This invention is relates to a system and/or method to enable a user to manage credential information that can be used to approve communications with various network and/or server components.

The present invention disclosed and claimed herein, in one aspect thereof, defines a portable device that facilitates management of a user credential(s) that can be used to connect to a network (*e.g.*, wireless, wired). The portable device includes an input component and a retention component. The input component defines a selected input method to input the user credential(s) into the portable device. The retention component defines a parameter for storing the user credential(s) in accordance with a user-defined selection. Additionally, the portable device can include a data store (*e.g*., cache memory) that retains the user credential(s) and a purging component configured to subsequently erase the user crcdcntial(s) in accordance with the user-defined selection.

The portable device can also include a connection component that, in response to a network detection, suitably creates an authentication request packet including the user credential(s) and transmits the authentication request packet to the network for authentication. It will be appreciated that the portable device can include an encryption component that encrypts the user credential(s) as desired. By way of example, encryption of the user credential(s) can occur prior to storing in the data store and/or prior to transmission to the network.

Another aspect of the present invention provides for a system that facilitates connection between a client and a network. The system can include a cache store (*e*.*g*., volatile, non-volatile memory) in communication with the client that, in accordance with a user instruction (*e*.*g*., retention policy) retains a user credential(s) (*e*.*g*., authentication credential(s)) for connection to the network. The system can further include a detection component that senses the network and a connection component that, in response to a detection of the network, obtains the user credential(s) from the cache store and facilitates communication with the network.

In another aspect of the present invention a method for managing a user credential(s) is provided that includes the act of defining a retention variable for the management of the user credential(s). The retention variable can quantify a predetermined retention expiration of the user credential(s). The method can further include the acts of selectively inputting (*e*.*g*., manual, automatic) the user credential(s) and the retention variable into a remote device and storing the user credential(s) in a cache store of the remote device in accordance with the retention variable. It will be appreciated that the method can be suitably configured to purge the user credential(s) from the cache store in accordance with the retention variable.

Yet another particular aspect of the present invention relates to a method of authenticating a remote device with a network. The method includes caching an authentication credential(s) in a cache store (*e*.*g*., volatile, non-volatile) of the remote device in accordance with a retention variable. It will be appreciated that the retention variable can be configured to represent an unlimited number of conceivable parameters or combinations of parameters. By way of example, the retention variable can be configured to expire upon the soft reset of the remote device.

Once the network is detected, the authentication credential(s) can be obtained from the cache store and transmitted to an authentication server of the network. It will be appreciated that encryption of the authentication credential(s) can occur prior to the caching and/or transmitting of the authentication credential(s). It will further be appreciated that the method can suitably be configured to select a technique to input the authentication credential(s) and to input the authentication credential(s) into the remote device in accordance with the selected technique of input.

To the accomplishment of the foregoing and related ends, certain illustrative aspects of the invention are described herein in connection with the following description and the annexed drawings. These aspects are indicative, however, of but a few of the various ways in which the principles of the invention can be employed and the present invention is intended to include all such aspects and their equivalents. Other advantages and novel features of the invention can become apparent from the following detailed description of the invention when considered in conjunction with the drawings.

### BRIEF DESCRIPTION OF THE DRAWINGS

FIG. 1 illustrates a general component block diagram of a remote terminal in accordance with an aspect of the invention.
FIG. 2 illustrates a flow chart of procedures to manage user credentials in accordance with an aspect of the disclosed invention.
FIG. 3 illustrates a network architectural diagram that illustrates representative network components in accordance with a disclosed embodiment.
FIG. 4 illustrates a system block diagram of an input component and a retention component in accordance with a disclosed embodiment.
FIG. 5 illustrates a system block diagram of the authentication information exchange in accordance with a disclosed embodiment.
FIG. 6 illustrates a flow chart of procedures to connect to a network in accordance with an aspect of the disclosed invention.
FIG. 7 illustrates a system block diagram of a computer operable to execute the disclosed embodiment.
FIG. 8 illustrates a device operable to execute an aspect of the disclosed invention.

### DETAILED DESCRIPTION OF THE INVENTION

The present invention is now described with reference to the drawings, wherein like reference numerals are used to refer to like elements throughout. In the following description, for purposes of explanation, numerous specific details are set forth in order to provide a thorough understanding of the present invention. It can be evident, however, that the present invention can be practiced without these specific details. In other instances, well-known structures and devices are shown in block diagram form in order to facilitate describing the present invention.

As used in this application, the terms "component" and "module" are intended to refer to a computer-related entity, either hardware, a combination of hardware and software, software, or software in execution. For example, a computer component or module can be, but is not limited to being, a process running on a processor, a processor, an object, an executable, a thread of execution, a program, and/or a computer. By way of illustration, both an application running on a server and the server can be a computer component. One or more computer components can reside within a process and/or thread of execution and a component can be localized on one computer and/or distributed between two or more computers.

As noted above, the present invention mitigates some of the aforementioned problems associated with the inability to manage network security credentials used in conjunction with authentication protocols. For example, various authentication protocols (*e*.*g*., Extensible Authentication Protocol (EAP), Kerberos, VPN and other Tunneling Protocols, and Server Login) require user credentials to facilitate the authentication process. The ability to manage the input method, retention lifespan and retrieval of these user credentials can alleviate the burden placed on a user to enter and re-enter the security information each time network access is desired. As well, re-entry can be required upon roaming from node to node or upon resuming from a power saving mode. The present invention can also alleviate burdens associated with these and other similar network connection processes.

Additionally, the ability to manage the operation of user credentials can reduce the power consumption expended upon repetitive entry and re-entry of user credential information. This reduction in power consumption is especially important in relation to today's more compact and streamlined portable communication devices. It will be appreciated by one skilled in the art that management (*e.g.*, caching, buffering or storing) of user credentials should be flexible, programmable, and safely stored on a remote device (*e.g.*, mobile wireless terminal).

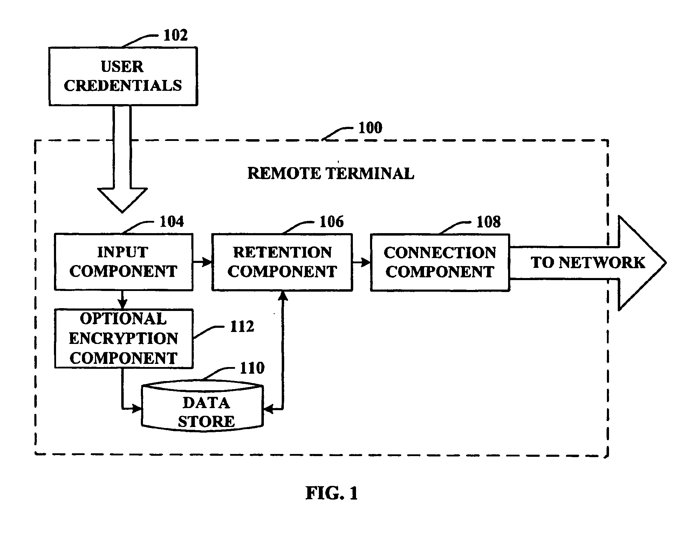

Referring initially to FIG. 1, a general block schematic diagram of a remote terminal 100 in accordance with the present invention is shown. Generally, remote terminal 100 can be suitably configured to manage user credentials 102 *via* an input component 104, a retention component 106, a connection component 108 and a data store 110.

The input component 104 can be configured to facilitate the method of input of user credential information 102 into the data store 110. For example, the input component 104 can facilitate the manual or automatic entry of user credentials 102 into the data store 110 of the remote terminal 100.

The retention component 106 can be configured to establish storage parameters and/or policies used to store a user credential(s) 102 in data store 110 as shown. Additionally, in accordance with the storage parameter and/or policy, the retention component 106 can be configured to purge the user credential(s) data 102 stored in the data store 110.

Finally, a connection component 108 is provided and can be configured to facilitate transmission of the user credential(s) data 102 from the remote terminal 100 to a network for authentication. Each of these three components is described in greater detail below. In another embodiment, an optional encryption component 112 can be used to encrypt the user credential data 102 prior to storage in the data store 110.

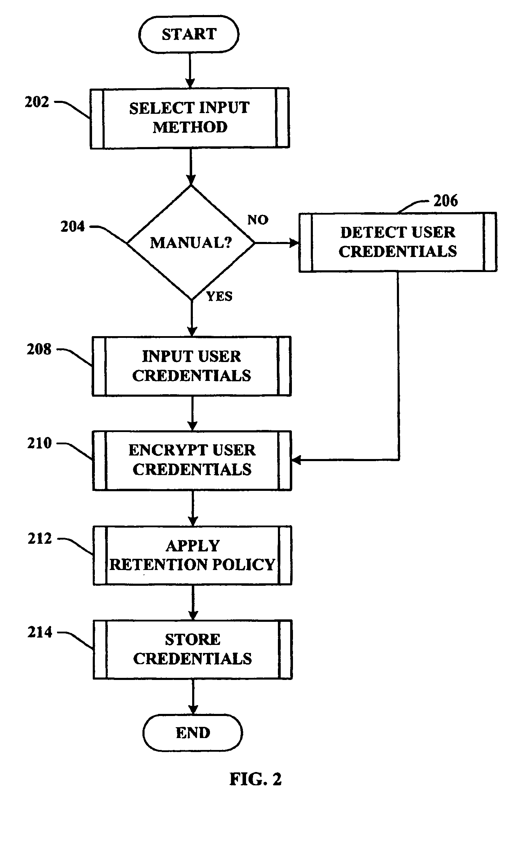

FIG. 2 illustrates a methodology for inputting and storing user credential(s) information in accordance with an aspect of the present invention. While, for purposes of simplicity of explanation, the one or more methodologies shown herein, *e.g.*, in the form of a flow chart, are shown and described as a series of acts. It is to be understood and appreciated that the present invention is not limited by the order of acts, as some acts can, in accordance with the present invention, occur in different orders and/or concurrently with other acts from those shown and described herein. For example, those skilled in the art will understand and appreciate that a methodology could alternatively be represented as a series of interrelated states, such as in a state diagram. Moreover, not all illustrated acts can be required to implement a methodology in accordance with an aspect the present invention.

Referring to FIG. 2, and proceeding to 202, an input method is selected. As described above, an input component can be utilized to select a desired method to input user credentials. The input method can include, but is not limited to, devices such as keypads, touchpads, bar-code scanners, imagers, retinal scanners, microphones and biometric sensors. For example, the input method can be manual or automatic based upon an unlimited number of variables. At 204, the system determines if a manual input is selected. If at 204 the system determines that manual input is not selected, the system automatically detects the user credentials at 206. An artisan will appreciate that automatic detection can include any method known in the art including, but not limited to, artificial intelligence, voice recognition, biometrics, machine-generated operations or the like.

If at 204, the system determines that manual input is selected, the system prompts for the manual input of the user credentials at 208. It will be appreciated that any suitable means (*e*.*g*., touchpad, keyboard and scanner) can be employed to manually input user credential information.

Once the user credential information is entered into the system, the user credentials can be encrypted at 210. Next, at 212, a retention policy is selected. As described above, any desired retention policy can be employed to manage the user credentials. Finally, the user credentials are stored at 214 in accordance with the selected retention policy.

Following is a general description of a wireless network architecture operable to execute a disclosed embodiment of the present invention. The architecture is described generally in order to disclose the manner in which authentication of user credentials occurs between a remote terminal and a network.

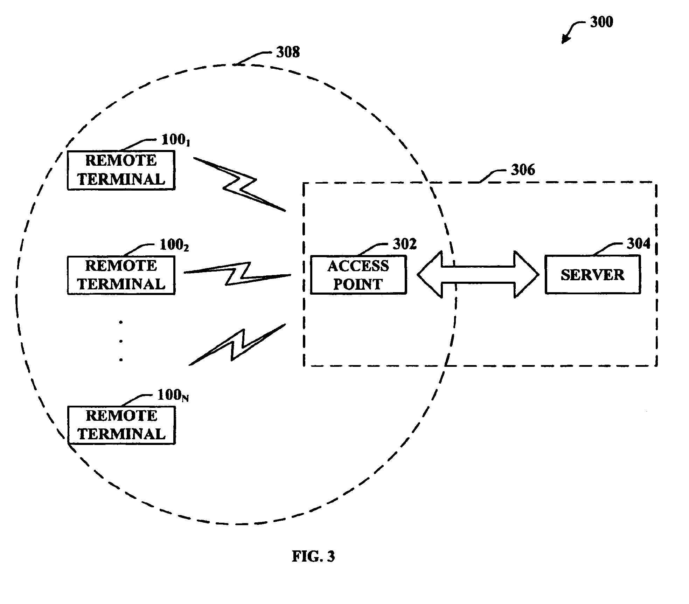

With reference now to FIG. 3, system 300 generally illustrates the architecture of a wireless computing environment in accordance with an aspect of the present invention. System 300 generally includes remote terminals 100₁, 100₂ to 100_{N}, where N is an integer. The remote terminals 100₁ through 100_{N} are referred to collectively as the remote terminals 100. An artisan will appreciate that remote terminals 100 can be any component capable of transmitting and/or receiving data *via* a wireless network such as any one of numerous wireless devices, including, but not limited to, a handheld terminal device, laptop/notebook computer, electronic tablet, personal digital assistant or the like.

Continued reference to FIG. 3 illustrates that the system 300 can include a node or access point 302 and an authentication server 304 that is configured to process user credential information received from the remote terminals 100. Specifically, the authentication server 304 processes the user credentials in order to authenticate or deny access to the network 306. It will be appreciated that the authentication server 304 and corresponding functionality can be employed as a stand-alone component or combined within another existing component. By way of example, the functionality of the authentication server 304 can be included within the functionality provided by the access point 302.

As illustrated in FIG. 3, the access point 302 can be configured to provide a communicative transition point between the remote terminals 100 and a dedicated wired network 306. In accordance with the present system and method, the access point 302 is capable of communicating with remote terminals 100 within the access point's defined range or service set 308. It will be appreciated that should an authenticated remote terminal 100 roam beyond the defined range 308 of access point 302, the remote terminal 100 would be required to authenticate to another access point (not shown). Thus, traditionally, a user would be required to manually re-enter user credential information.

In one embodiment, the authentication server 304 provides authentication and authorization services to any network entity that functions as an authenticator. A network entity can take the role of an authenticator when that entity performs authentication in conjunction with the authentication server 304 on behalf of another entity requesting access to the network. For example, the authentication server 304 can determine, from credentials provided by the remote terminals 100, whether the remote terminals 100 are authorized to access services controlled by the authenticator (*e*.*g*., access point 302).

An artisan will appreciate that component *(e.g.,* remote terminals 100) authentication can occur upon system initialization. Alternatively, component authentication can occur when the component requests connection to a node of an authenticator system or when authorized access has become unauthorized or lost (*e*.*g*., roams). Traditionally, for each authentication occurrence, user credential information was manually input into the remote terminal 100 and sent to the authentication server 304 in order to prompt the authentication process.

Although the embodiments of the present system and method described herein are directed toward a wireless (*e.g.*, Institute of Electrical and Electronics Engineers (IEEE) standard 802.11) network, it will be appreciated by one skilled in the art that the present concepts and innovations described herein can be applied to alternate wired and/or wireless network protocols without departing from the spirit, scope and/or functionality of the present invention.

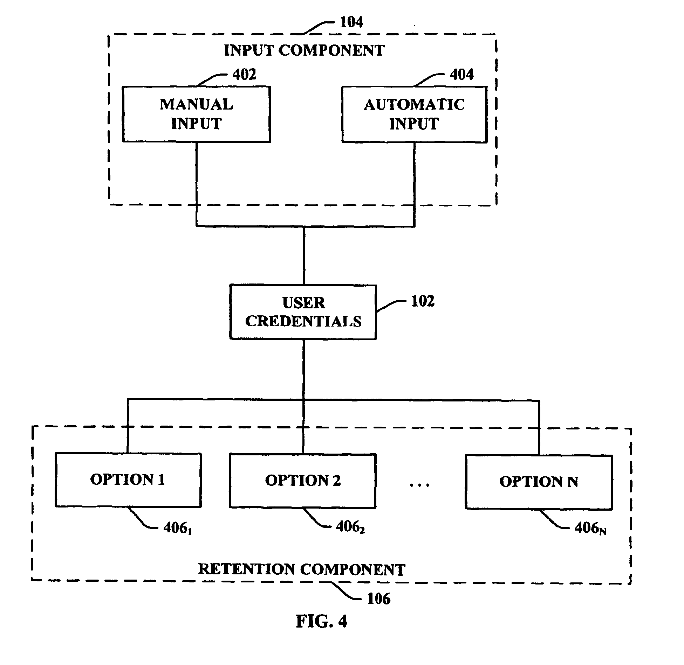

Referring now to FIG. 4, a block diagram of input component 104 and the retention component 106 is shown. The input component 104 can be configured to identify the method for which the user credentials 102 are entered into the remote terminal. By way of example, illustrated in FIG. 4 are two exemplary input methods, manual 402 and automatic 404.

With respect to the manual input 402, the user credentials 102 can be manually input by a user *via* a keypad, touchpad or other suitable input device or technology (*e.g.*, voice recognition). For example, a user can utilize a bar code or other optical scanning device to manually input the user credential information.

In accordance with the automatic input 404, the system can be suitably configured to employ input methods including, but not limited to, voice recognition, biometrics (*e.g.*, fingerprint and/or retinal scanning), artificial intelligence or the like. By way of example, the input component can be configured to employ a visual artificial intelligence detection component to detect the user credential information and to subsequently input the detected information into the present invention. It will be appreciated that the artificial intelligence aspects of the present invention can be affected *via* any suitable machine-learning-based technique known in the art.

The retention component 106 shown in FIG. 4 can be configured to retain (*e.g.*, cache) the user credentials in accordance with any number of retention variables or options (*e.g.*, 406₁, 406₂, 406_{N}). As illustrated, retention component 106 can include retention options 406₁, 406₂ to 406_{N}, where N is an integer. Retention options 406₁, 406₂ to 406_{N} are referred to collectively as retention options 406. It will be appreciated by one skilled in the art that the retention lifetime of the user credentials can vary based upon any number of variables. Retention can range from a very short period of time to an indefinite or permanent time period. By way of example, the retention lifetime can be based upon any number of variables including, but not limited to, user preferences, predetermined retention policies or data/zone sensitivities.

In one embodiment of the present invention, retention option 406 can employ a methodology of storing the user credentials indefinitely in the data store or memory of a mobile remote terminal. In accordance with this option, the user credentials can be stored in an encrypted *(e.g.,* MD5, Triple Data Encryption Standard (DES)) format in a non-volatile data store or memory to assist in secure handling and retention of the credentials.

In another embodiment of the present invention, storage option 406 can employ a methodology of retaining the user credentials in a volatile (*e.g.*, random access memory (RAM)) data store. Again, for security, the user credentials can be stored in an encrypted format. In accordance with this embodiment, the user credentials can reside in the data store until a soft-reset *(e.g.,* warm boot) of the remote device is generated. By way of example, the user credentials can reside in a random access memory *(e.g.,* dynamic random access memory (DRAM)) until a warm boot of the device is affected.

In another embodiment, the user credentials can be stored in the data store for a user-defined predetermined length of time. Upon expiration of the time period, the credentials can be purged from the data store thus requiring re-entry of the user credentials in order to re-authenticate with the network.

In accordance with another embodiment, the system can be configured to detect and evaluate security zones whereby a predefined security zone can be configured to require the re-input of user credentials in order to access the services available in a specific security zone. In other words, these security zones can be configured to override other retention options thus requiring the re-entry of user credentials in order to authenticate and access the secure zone of the network.

In yet another embodiment, the user can opt not to save the credentials thereby requiring the input of the credentials on every power down/power up cycle or suspend/resume cycle of the remote device. As well, input may be prompted upon detection of a network thus requiring entry of user credentials upon each authentication request. Obviously, this option affords the maximum protection of user credentials however, this option also places the largest burden on a user to re-enter the user credential information upon each authentication cycle.

An artisan will appreciate that any desired combination of inputting, storing and/or purging of the user credentials can be utilized in accordance with the present system and/or method without departing from the spirit and/or scope of the invention. By way of example, it will be appreciated that the present invention can be configured to prompt for the manual or automatic input of user credentials upon detection of a network. It will further be appreciated that the retention variable may be automatically defined based upon a predefined set of parameters *(e.g.,* zone, data type) and/or device type *(e.g.,* handheld, laptop). By way of example, in relation to a highly classified zone, the retention variable can be automatically defined to expire upon exit of the zone thus requiring re-entry of the user credentials in order re-access the classified zone.

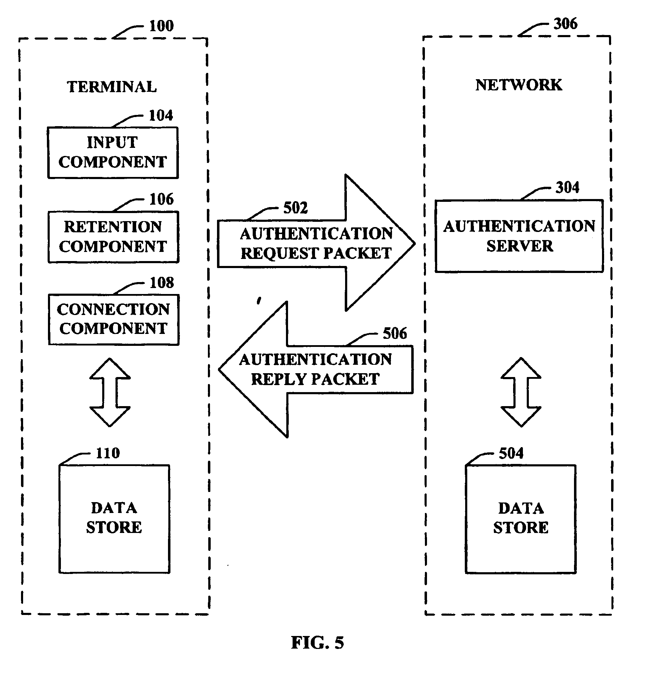

Now with reference to FIG. 5, a system block diagram of the authentication information exchange in accordance with the present system is shown. FIG. 5 generally illustrates the remote terminal 100 in communication with the wired network 306. Specifically, remote terminal 100 includes the input component 104, the retention component 106, the connection component 108 and the data store 110. The data store 110 can be configured to retain user credential information (*e*.*g*., login name, password) in accordance with a selected variable and/or policy.

In accordance with the present invention, the remote terminal 100 is capable of managing *(e.g.,* selecting input, retention, purge methods) a user credential in accordance with the defined policy. As well, the data store 110 is capable of retaining *(e.g.,* caching) the user credentials in accordance with the defined policy.

In operation, a user can select management criteria *(e.g.,* input, retention, purge method) to control the handling of the user credentials. Once the user credentials have been inputted and stored in the data store 110, a remote terminal 100 can be configured to retrieve the user credentials stored from data store 110 for use in the authentication process.

Next, the remote terminal 100 can incorporate the user credential information into an authentication request packet 502 and subsequently transmit the authentication request packet 502 to the network 306 for authentication by the authentication server 304. The authentication request packet 502 is received and processed by the authentication server 304 whereby the authentication server 304 compares the user credentials contained in the authentication request packet 502 to access information stored within its data store 504. As a result, a determination (*e*.*g*., authorized or denied) is made and returned to the remote terminal 100 in an authentication reply packet 506.

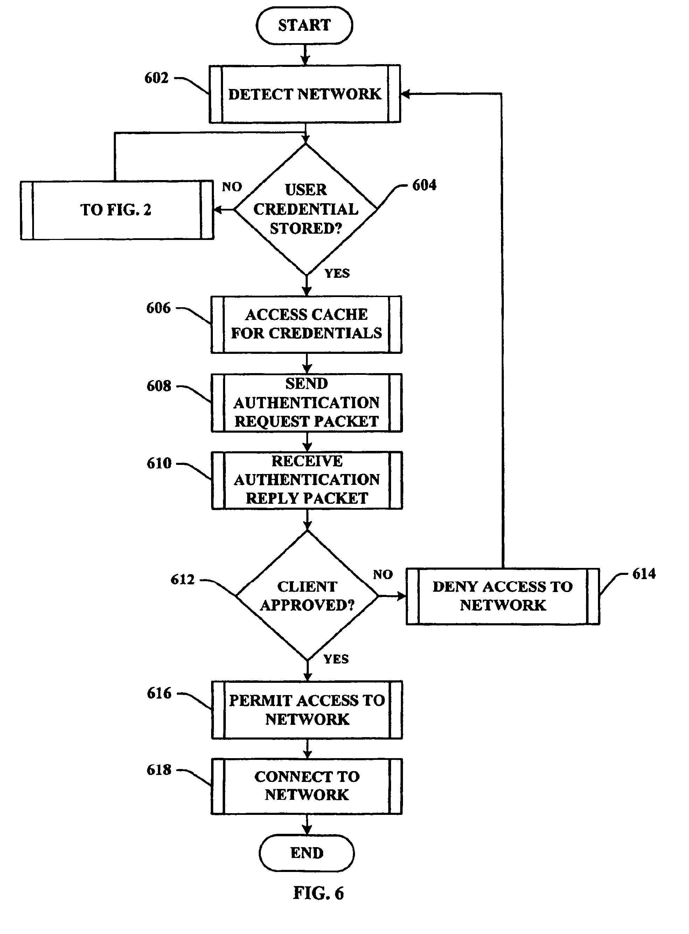

FIG. 6 illustrates a methodology for detecting and subsequently authenticating to a network in accordance with an aspect of the present invention. Referring to FIG. 6, and proceeding to 602, a network is detected. Next, at 604, the system determines if user credentials are stored. If, at 604, the system determines that user credentials are not stored, the system proceeds to the methodology outlined in FIG. 2 and returns to 604 as illustrated. As discussed earlier, the methodology outlined in FIG. 2 includes the selection and identification of an input method as well as the selection and identification of a retention option, variable and/or policy.

If, at 604, the system determines that user credentials have been stored, at 606, the system accesses the data store (*e.g.*, cache memory) to retrieve the user credentials. Once retrieved, at 608, the user credentials are incorporated into an authentication data packet and sent to the network for authentication. In response, the system receives an authentication reply packet at 610.

Upon receipt of the authentication packet at 610, the system determines if the client is approved at 612. If at 612 the system determines that the client is not approved, the system denies access to the network at 614 and resets to the network detection 602 as illustrated.

If, at 612, a determination is made that the client is approved the client is permitted access at 616 and connects to the network at 618. It will be appreciated that the procedures set forth in methodology can be employed each time a network connection is desired or lost.

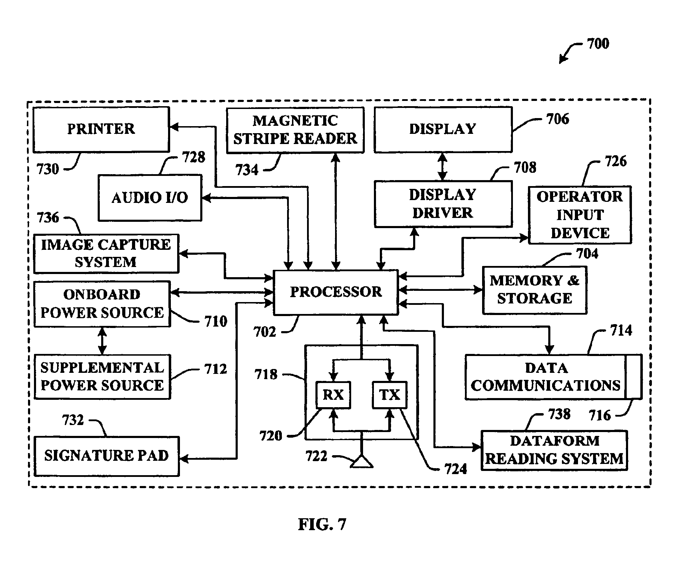

In order to provide a context for the various aspects of the invention, FIG. 7 and the following discussion are intended to provide a brief, general description of a suitable computing environment in which the various aspects of the present invention can be implemented. While the invention has been described above in the general context of computer-executable instructions of a computer program that runs on a computer and/or computers, those skilled in the art will recognize that the invention also can be implemented in combination with other program modules. Generally, program modules include routines, programs, components, data structures, etc. that perform particular tasks and/or implement particular abstract data types.

Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like. The illustrated aspects of the invention can also be practiced in distributed computing environments where tasks are performed by remote processing devices that are linked through a communications network. However, some, if not all aspects of the invention can be practiced on stand-alone computers. In a distributed computing environment, program modules can be located in both local and remote memory storage devices.

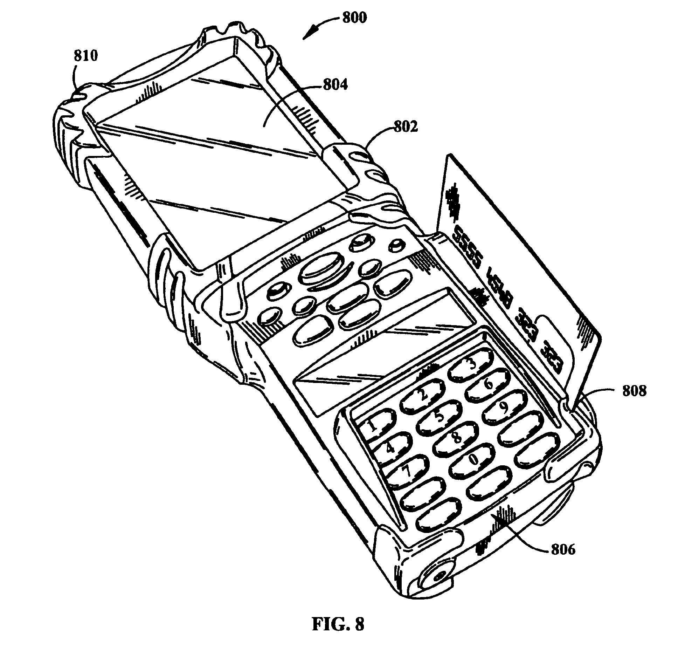

Referring now to FIG. 7, there is illustrated a schematic block diagram of a portable hand-held terminal device 700 (similar to the portable scanning device 800 as illustrated in FIG. 8) according to one aspect of the present invention, in which a processor 702 is responsible for controlling the general operation of the device 700. The processor 702 is programmed to control and operate the various components within the device 700 in order to carry out the various functions described herein. The processor 702 can be any of a plurality of suitable processors. The manner in which the processor 702 can be programmed to carry out the functions relating to the present invention will be readily apparent to those having ordinary skill in the art based on the description provided herein.

A memory 704 connected to the processor 702 serves to store program code executed by the processor 702, and also serves as a storage means for storing information such as user credential and receipt transaction information and the like. The memory 704 can be a non-volatile memory suitably adapted to store at least a complete set of the information that is displayed. Thus, the memory 704 can include a RAM or flash memory for high-speed access by the processor 702 and/or a mass storage memory, *e.g.*, a micro drive capable of storing gigabytes of data that comprises text, images, audio, and video content. According to one aspect, the memory 704 has sufficient storage capacity to store multiple sets of information, and the processor 702 could include a program for alternating or cycling between various sets of display information.

A display 706 is coupled to the processor 702 *via* a display driver system 708. The display 706 can be a color liquid crystal display (LCD), plasma display, or the like. In this example, the display 706 is a ¼ VGA display with sixteen levels of gray scale.
The display 706 functions to present data, graphics, or other information content. For example, the display 706 can display a set of customer information, which is displayed to the operator and can be transmitted over a system backbone (not shown). Additionally, the display 706 can display a variety of functions that control the execution of the device 700. The display 706 is capable of displaying both alphanumeric and graphical characters.

Power is provided to the processor 702 and other components forming the hand-held device 700 by an onboard power system 710 *(e.g.,* a battery pack). In the event that the power system 710 fails or becomes disconnected from the device 700, a supplemental power source 712 can be employed to provide power to the processor 702 and to charge the onboard power system 710. The processor 702 of the device 700 induces a sleep mode to reduce the current draw upon detection of an anticipated power failure.

The terminal 700 includes a communication subsystem 714 that includes a data communication port 716, which is employed to interface the processor 702 with a remote computer. The port 716 can include at least one of Universal Serial Bus (USB) and IEEE 1394 serial communications capabilities. Other technologies can also be included, for example, infrared communication utilizing an infrared data port.

The device 700 can also include a radio frequency (RF) transceiver section 718 in operative communication with the processor 702. The RF section 718 includes an RF receiver 720, which receives RF signals from a remote device *via* an antenna 722 and demodulates the signal to obtain digital information modulated therein. The RF section 718 also includes an RF transmitter 724 for transmitting information to a remote device, for example, in response to manual user input *via* a user input device 726 *(e.g.,* a keypad) or automatically in response to the completion of a transaction or other predetermined and programmed criteria. The transceiver section 718 facilitates communication with a transponder system, for example, either passive or active, that is in use with product or item RF tags. The processor 702 signals (or pulses) the remote transponder system *via* the transceiver 718, and detects the return signal in order to read the contents of the tag memory. In one implementation, the RF section 718 further facilitates telephone communications using the device 700. In furtherance thereof, an audio I/O section 728 is provided as controlled by the processor 702 to process voice input from a microphone (or similar audio input device) and audio output signals (from a speaker or similar audio output device). In another implementation, the device 700 can provide voice recognition capabilities such that when the device 700 is used simply as a voice recorder, the processor 702 can facilitate high-speed conversion of the voice signals into text content for local editing and review, and/or later download to a remote system, such as a computer word processor. Similarly, the converted voice signals can be used to control the device 700 instead of using manual entry *via* the keypad 726.

Onboard peripheral devices, such as a printer 730, signature pad 732, and a magnetic strip reader 734 can also be provided within the housing of the device 700 or accommodated externally through one or more of the external port interfaces 716.

The device 700 can also include an image capture system 736 such that the user can record images and/or short movies for storage by the device 700 and presentation by the display 706. Additionally, a dataform reading system 738 is included for scanning dataforms. It is to be appreciated that these imaging systems (736 and 738) can be a single system capable of performing both functions.

FIG. 8 is provided to assist in understanding and to provide context to an embodiment of the present invention. Specifically, FIG. 8 illustrates an example of a handheld terminal 800 in accordance with an aspect of the present invention.

The handheld terminal 800 includes a housing 802 which can be constructed from a high strength plastic, metal, or any other suitable material. The handheld terminal 800 includes a display 804. As is conventional, the display 804 functions to display data or other information relating to ordinary operation of the handheld terminal 800 and/or mobile companion (not shown). For example, software operating on the handheld terminal 800 and/or mobile companion can provide for the display of various information requested by the user. Additionally, the display 804 can display a variety of functions that are executable by the handheld terminal 800 and/or one or more mobile companions. The display 804 provides for graphics based alpha-numerical information such as, for example, the price of an item requested by the user. The display 804 also provides for the display of graphics such as icons representative of particular menu items, for example. The display 804 can also be a touch screen, which can employ capacitive, resistive touch, infrared, surface acoustic wave, or grounded acoustic wave technology.

The handheld terminal 800 further includes user input keys 806 for allowing a user to input information and/or operational commands. The user input keys 806 can include a full alphanumeric keypad, function keys, enter keys, etc. The handheld terminal 800 can also include a magnetic strip reader 808 or other data capture mechanism (not shown). An electronic signature apparatus can also be employed in connection with the magnetic strip reader or a telecheck system.

The handheld terminal 800 can also include a window 810 in which a bar code reader/bar coding imager is able to read a bar code label, or the like, presented to the handheld terminal 800. The handheld terminal 800 can include a light emitting diode (LED) (not shown) that is illuminated to reflect whether the bar code has been properly or improperly read. Alternatively, or additionally, a sound can be emitted from a speaker (not shown) to alert the user that the bar code has been successfully imaged and decoded. The handheld terminal 800 also includes an antenna (not shown) for wireless communication with a radio frequency (RF) access point; and an infrared (IR) transceiver (not shown) for communication with an IR access point.

What has been described above includes examples of the present invention. It is, of course, not possible to describe every conceivable combination of components or methodologies for purposes of describing the present invention, but one of ordinary skill in the art can recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A portable device that facilitates management of a user credential to connect to a network, the portable device comprising:
an input component that defines a selected input method to input the user credential into the portable device; and
a retention component that defines a parameter for storing the user credential in accordance with a user-defined selection.

2. The portable device set forth in claim 1, further comprising a data store that retains the user credential in accordance with the user-defined selection.

3. The portable device set forth in claim 2, further comprising a purging component that erases the user credential from the data store in accordance with the user-defined selection.

4. The portable device set forth in claim 2, wherein the data store is a cache store.

5. The portable device set forth in claim 2, wherein the data store is a volatile memory device.

6. The portable device set forth in claim 2, wherein the data store is a non-volatile memory device.

7. The portable device set forth in claim 1, further comprising an encryption component that encrypts the user credential.

8. The portable device set forth in claim 1, wherein the network is a wireless network.

9. A system that facilitates connection between a client and a network, the system comprising:
a cache store in communication with the client that, in accordance with a user instruction, retains a user credential for connection to the network; and
a connection component that, in response to a detection of the network, obtains the user credential from the cache store and facilitates communication with the network.

10. The system set forth in claim 9, wherein the user instruction is a retention policy.

11. The system set forth in claim 9, wherein the cache store is a volatile storage device.

12. The system set forth in claim 9, wherein the user credential is an authentication credential.

13. A method for managing a user credential, the method comprising:
defining a retention variable for the management of the user credential, the retention variable to quantify a predetermined retention expiration of the user credential;
inputting the retention variable into a remote device;
inputting the user credential into the remote device; and
storing the user credential in a cache store of the remote device in accordance with the retention variable.

14. The method set forth in claim 13, further comprising purging the user credential from the cache store upon expiration of the retention variable.

15. The method set forth in claim 13, further comprising selecting an input method to input the user credential into the remote device.

16. The method set forth in claim 13, further comprising automatically detecting the user credential.

17. A computer readable medium having computer-executable instructions to perform the acts recited in claim 13.

18. A method of authenticating a remote device with a network, the method comprising:
caching an authentication credential in a cache store of the remote device in accordance with a retention variable; and
obtaining the authentication credential from the cache store.

19. The method set forth in claim 18, further comprising selecting a method to input the authentication credential and inputting the authentication credential into the remote device in accordance with the selected method of input.

20. The method set forth in claim 18, wherein the act of caching comprises storing the authentication credential in a non-volatile data store.

21. The method set forth in claim 18, wherein the act of caching comprises storing the authentication credential in a volatile data store.

22. The method set forth in claim 18, further comprising setting the retention variable to expire upon a soft reset of the remote device.

23. The method set forth in claim 18, further comprising setting the retention variable to expire on a power down/up cycle of the remote device.

24. The method set forth in claim 18, further comprising encrypting the authentication credential.

25. A computer readable medium having computer-executable instructions to perform the acts recited in claim 18.

26. A system for managing a credential in a remote device, the system comprising:
means for caching the credential in a data store; and
means for defining a retention variable in connection with the cache.

27. The system set forth in claim 26, further comprising means for discarding the cached credential upon expiration of the retention variable.

28. The system set forth in claim 26, further comprising means for selecting an input method to input the credential into the remote device.

29. The system set forth in claim 28, further comprising means for inputting the credential into the remote device in accordance with the selected input method.

30. The system set forth in claim 29, further comprising means for connecting to a network.
